Europäisches Patentamt

European Patent Office

Office européen des brevets

(19)

(11) Publication number : **0 552 065 A1**

# (12) EUROPEAN PATENT APPLICATION

(21) Application number : 93300303.0

(22) Date of filing : 18.01.93

(51) Int. Cl.$^5$ : **B41M 5/30,** C09C 1/30,
C01B 33/193

(30) Priority : 17.01.92 JP 26161/92

(43) Date of publication of application :
21.07.93 Bulletin 93/29

(84) Designated Contracting States :
AT BE CH DE DK ES FR GB GR IE IT LI LU MC
NL PT SE

(71) Applicant : SHIONOGI & CO., LTD.
1-8 Doshomachi-3-chome
Chou-ku Osaka-shi (JP)

(72) Inventor : Une, Ikuo
16-7 Akibadai 1-chome, Nishi-ku
Kobe-shi, Hyogo-ken (JP)
Inventor : Aoki, Tsuneto
2, Miyamaecho 5-chome
Akou-shi, Hyogo-ken (JP)
Inventor : Nishiyama, Takashi
3232-38 Shioya
Akou-shi, Hyogo-ken (JP)

(74) Representative : Hardisty, David Robert et al
BOULT, WADE & TENNANT 27 Furnival Street
London EC4A IPQ (GB)

(54) A silica filler for a heat sensitive recording paper.

(57) The principal object of the present invention is to solve the problem of high viscosity arising in the case of the high concentration dispersion of a coating liquid composition for a heat sensitive recording paper, using the high oil absorptivity amorphous silica of the prior art as a filler.

This object can be attained by using a silica filler for a heat sensitive recording paper, consisting of amorphous silica having a pore volume of 1.5 to 2.8 ml/g with a pore radius of at most 75000 Å. Preferred embodiments consist in a silica filler for a heat sensitive recording paper, consisting of amorphous silica having a pore volume of 1.5 to 2.5 ml/g with a pore radius of at most 75000 Å and nitrogen adsorption external surface area (calculated by the t-method) of 20 to 70 m$^2$/g and a silica filler for a heat sensitive recording paper, consisting of amorphous silica having a pore volume of 1.5 to 2.8 ml/g with a pore radius of at most 75000 Å and a pH in a 5 % suspension of 7.0 to 9.0.

EP 0 552 065 A1

This invention relates to a silica filler for a heat sensitive recording paper and more specifically, it is concerned with a silica filler for a heat sensitive recording paper, consisting of amorphous silica which is capable of giving a coating liquid composition for a heat sensitive recording paper, said coating liquid composition having a low viscosity and being capable of inhibiting, as far as possible, melt material adhesion to a thermal head, etc., abrasion, fading and base paper discoloration as appeared on a heat sensitive paper.

As well known in the art, the demand for recording papers used for information-related devices has been diversifying and increasing with the development and progress of the so-called information-oriented society such as office automations (OA) or new media in recent years. Above all, heat sensitive recording papers of leuco dye type, used for facsimiles or various printers, have lately been watched with keen interest, which utilize a coloring reaction by thermal fusion of a colorless leuco dye and phenol compound.

The heat sensitive recording paper of this type has a problem in that the above described thermally fused material adheres to a thermal head of a printer during coloring and tends to be accumulated thereon, thus resulting in melting material adhesion to the thermal head and sticking phenomenon. As a means for solving this problem, it has hitherto been known to add a filler with a high oil absorptivity to a coloring layer of a.recording paper and as this filler (additive), there have generally been used amorphous silica with a high oil absorptivity, as proposed in Japanese Patent Laid-Open Publication No. 22794/1984.

When the known amorphous silica having a high oil absorptivity is applied to a heat sensitive recording paper, there are a number of points to be solved with respect to the properties.

The first point to be solved consists in the grain diamter of the amorphous silica, the concentration of a dispersion thereof and the viscosity of the dispersion. That is, in a process for the production of a heat sensitive recording paper, it is required to reduce the grain diameter of the high oil absorptivity amorphous silica in order to increase the coloring sensitivity, as in the case of dyes, developers, assistants, etc. To this end, the amorphous silica should be pulverized and dispersed in fine grains with a grain size of at most several $\mu$ m by means of a wet pulverizer such as sand mill, but when preparing this dispersion liquid, the dispersion concentration of the amorphous silica has an important influence upon th stability of the dispersion or the viscosity thereof during coating.

In recent years, a higher dispersion concentration of amorphous silica is preferable so as to increase the productivity and when using the amorphous silica as a filler for a heat sensitive recording paper, it is considered important to lower the viscosity of a high concentration dispersion liquid of amorphous silica and it is desired to improve the first point.

The second point to be solved consists in that the amorphous silica has good running property between various heads and papers as an amorphous silica for a heat sensitive recording paper and in addition, does not wear a recording head itself.

As to the first point to be solved, the high oil absorptivity amorphous silica of the prior art exhibits such a high viscosity, when it is dispersed in a proportion of about 30 % by weight during making a recording paper, that a high concentration dispersion is difficult, and it is substantially impossible to effect the dispersion in a proportion exceeding 30 % by weight.

As to the second point to be solved, the high oil absorptivity amorphous silica of the prior art contains such a large amount of an alkali metal so as to suppress base paper discoloration that there arises a problem that abrasion of a recording head itself and fading tendency are increased, and this problem cannot fully be solved.

The present invention has been made under the situation in order to solve these problems of the prior art.

It is an object of the present invention to provide a silica filler for a heat sensitive recording paper, whereby both the above described first point and the second point can be solved.

It is another object of the present invention to solve the problem of a high viscosity arising in the case of the high concentration dispersion of a coating liquid composition for a heat sensitive recording paper, using the high oil absorptivity amorphous silica of the prior art as a filler.

It is a further object of the present invention to provide a silica filler for a heat sensitive recording paper, which is capable of inhibiting, as far as possible, tendencies of melting material adhesion to a thermal head, etc., abrasion, fading and base paper discoloration, as appeared on a heat sensitive paper.

These objects can be attained by a silica filler for a heat sensitive recording paper, consisting of amorphous silica having the specified pore volume and nitrogen adsorption external surface area by the t-method.

The accompanying drawing illustrates the principle and merits of the present invention in detail.

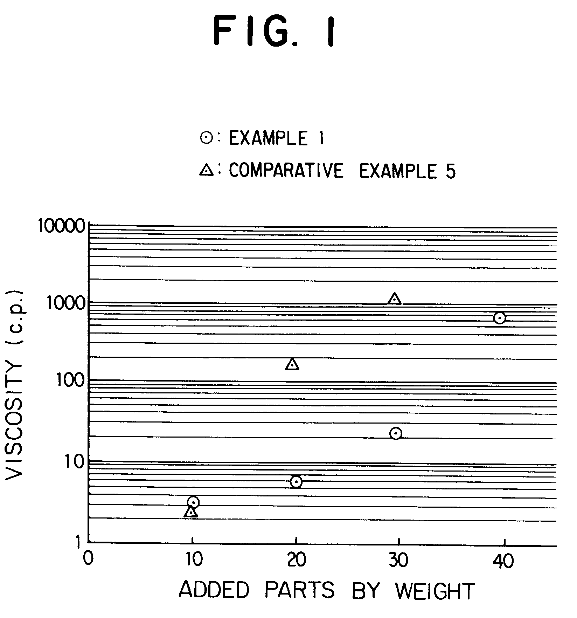

Figure 1 is a graph showing the relationship between the quantity of amorphous silica added and the viscosity as to dispersion liquid of fine powder of amorphous silica of Example 1 and fine powder of amorphous silica of Comparative Example 5.

The inventors have made various efforts to develop silica filler for a heat sensitive recording paper, capable of providing a coating liquid composition with a low viscosity and good running property between various heads and papers and consequently have found that a silica filler for a heat sensitive recording paper, consisting of

2

amorphous silica having the specified pore volume and nitrogen adsorption external surface area by the t-method is effective for this purpose.

Accordingly, the present invention provides a silica filler for a heat sensitive recording paper, consisting of amorphous silica having a pore volume of 1.5 to 2.8 ml/g with a pore radius of at most 75000 Å .

The present invention includes two preferable embodiments, the first embodiment and second embodiment. The feature of the first embodiment consists in a silica filler for a heat sensitive recording paper, consisting of amorphous silica whose pore volume and nitrogen adsorption external surface area by the t-method are specified and whose residual sodium content, median diameter and BET specific surface area by water vapor adsorption are specified, whereby the above described object can be attained. The feature of the second invention consists in a silica filler for a heat sensitive recording paper, consisting of amorphous silica whose pore volume and pH in a 5 % suspension are specified noting the pH value of a silica suspension which has not been considered up to the present invention, whereby the above described object can also be attained.

That is, the feature of the first embodiment consists in a silica filler for a heat sensitive recording paper, consisting of amorphous silica,

(1) said amorphous silica having a pore volume of of 1.5 to 2.5 ml/g with a pore radius of at most 75000 Å and nitrogen adsorption external surface area by the t-method of 20 to 70 m²/g, and said amorphous silica having:
(2) a residual sodium ion content of at most 1500 ppm,
(3) an oil absorption amount of 100 to 200 ml/100 g,
(4) a median diameter of 1.0 to 1.5 μ m measured by the Coulter Counter method and
(5) a BET specific surface area by water vapor adsorption of 220 to 300 m² /g.

The feature of the second embodiment consists in a silica filler for a heat sensitive recording paper, consisting of amorphous silica,

(1) said amorphous silica having a pore volume of of 2.0 to 2.8 ml/g with a pore radius of at most 75000 Å and said amorphous silica having:
(2) a pH in a 5 % suspension of 7.0 to 9.0.

The inventors have succeeded in synthesizing an amorphous silica having the above described specified properties and have found that the above described object can be attained by adjusting the pH of a suspension of the amorphous silica to the specified range and using the amorphous silica as a filler for a heat sensitive recording paper. Consequently, the first and second embodiments of the present invention are completed based on this finding.

Thus, the present invention will now be illustrated with reference to the first and second embodiments.

First Embodiment

The important feature of the first embodiment consists in that the amorphous silica as a filler for a heat sensitive recording paper has a pore volume of 1.5 to 2.5 ml/g with a pore radius of at most 75000 Å measured by the mercury intrusion porosimetry with a pore.

If the pore volume exceeds 2.5 ml/g, the viscosity is increased during dispersing in a step of producing a heat sensitive recording paper so that high concentration dispersion is difficult, while if less than 1.5 ml/g, there occurs such a tendency that the effect of preventing a melting material adhesion to a thermal head or recording layer is lowered and a recording head in contact with a recording layer is subject to abrasion.

According to the present first embodiment, there can be obtained the advantages or effects that the melting material adhesion to a recording layer, etc. is prevented while suppressing the viscosity of a dispersion and the abrasion of a recording head in contact with a recording layer, etc. is prevented during dispersing in a step of producing a heat sensitive recording paper by specifying the pore volume in the range of 1.5 to 2.5 ml/g.

The other important feature of the first embodiment consists in that the amorphous silica has a nitrogen adsorption external surface area by the t-method of 20 to 70 m²/g, preferably 20 to 50 m²/g. The amorphous silica has an intrinsic surface activity and a function to accelerate reactions of leuco dyes and phenols, but the first embodiment provides the function or effect that the reactions of leuco dyes and phenols are suppressed to a lower level and the base paper discoloration are remarkably suppressed by controling the nitrogen adsorption external surface area by the t-method of the amorphous silica to the above described range (at most 70 m²/g) to markedly lower the surface activity. When the nitrogen adsorption external surface area by the t-method is less than 20 m²/g, the effect of preventing melting material adhesion cannot sufficiently be obtained.

Furthermore, it is also important that the amorphous silica used in the first embodiment has a residual sodium ion content of at most 1500 ppm, preferably at most 1000 ppm. The residual sodium ion is related with the abrasion of a recording head in contact with a recording layer and when the sodium ion content exceeds the above described range (at most 1500 ppm), head abrasion becomes marked, which should be avoided.

According to the first embodiment, there can be attained the function or effect that abrasion of a recording head in contact with a recording layer can be prevented by controlling the residual sodium ion content in the above described range (at most 1500 ppm).

It is also important that the amorphous silica used in the first embodiment has an oil absorptivity of 100 to 200 ml/100 g. That is, the oil absorption amount is closely related with the melting material adhesion to a thermal head or recording layer. If the oil absorption amount is less than 100 m l/ 100 g, the melting material adhesion is markedly increased, while if more than 200 ml/100 g, it is difficult to suppress the base paper discoloration, although the melting material adhesion is somewhat is prevented.

Moreover, it is preferable that the amorphous silica used in the first embodiment has a median diameter of 1.0 to 1.5 $\mu$ m measured by the Coulter Counter method, because the secondary grain diameter of the amorphous silica is so fine that a recorded image be obtained having a high coloring sensitivity during recording, high image density and high sharpness.

It is further important that the amorphous silica used in the first embodiment has a BET specific surface area by water vapor adsorption of 220 to 300 $m^2$ /g in connection with having the nitrogen adsorption external surface area in the above described range, whereby to give a function or effect to raise the coloring sensivity during recording.

As described above, the physical properties of the amorphous silica specified in the first embodiment are respectively illustrated in detail. In summary, the first embodiment is characterized in that the pore volume and nitrogen adsorption external surface area by the t-method of the amorphous silica are specified and further, the residual sodium ion content, median diameter and BET specific surface area by water vapor adsorption are specified, resulting in the benefits that a silica filler for a heat sensitive recording paper can be obtained which is capable of dissolving the high viscosity accompanied with high concentration dispersion in a coating liquid composition for a heat sensitive recording paper using, as a filler, a high oil absorptivity amorphous silica of the prior art and capable of inhibiting, as far as possible, melting material adhesion to a thermal head, etc., abrasion, fading and base paper discoloration, as appeared on a heat sensitive paper.

Second Embodiment

The second embodiment will be illustrated. The feature of the second embodiment consists in that the amorphous silica has a pore volume of 2.0 to 2.8 ml/g with a pore radius of at most 75000 Å measured by the mercury intrusion porosimetry. Herein, it is to be noted that this range is different from the pore volume range of the first embodiment 11.5 to 2.5 ml/g) except being partly overlapped. In the second embodiment, if the pore volume exceeds 2.8 ml/g, not only the viscosity becomes higher during dispersing, but also high concentration dispersing is difficult in the step of producing a heat sensitive recording paper, and moreover, base paper discoloration is hardly prevented, which is not preferable. On the other hand, if the pore volume is less than 2.0 ml/g, there occurs such a tendency that the effect of preventing a melting material adhesionto a thermal head or recording layer is lowered and a recording head, etc. in contact with a recording layer is subject to abrasion, which should be avoided.

According to the present second embodiment, there can be obtained the advantages or effects that the melting material adhesion to a recording layer, etc. is prevented while suppressing the viscosity of a dispersion and the abrasion of a recording head in contact with a recording layer, etc. is prevented during dispersing in a step of producing a heat sensitive recording paper by specifying the pore volume in the range of 2.0 to 2.8 ml/g.

In addition, the feature of the second embodiment consists in that the amorphous silica having the above described specified pore volume will give a pH of 7.0 to 9.0 in its 5 % suspension. This has not been considered up to the present time in the art. The activity of silanol group on the surface of the amorphous silica is reduced by controlling the pH in this range, whereby to remarkably suppress the reaction of the silanol group with a leuco dye, causing base paper discoloration.

If the pH is smaller than 7, base paper discoloration cannot sufficiently be suppressed, while if larger than 9, the residual metal ion content is increased, resulting in increase of the abrasion of a recording head and in a tendency of lowering the coloring density, which should be avoided.

As described above, the second embodiment consists of the amorphous silica having the pore volume specified and the pH specified in the form of a 5 % suspension, whereby the similar effects or benefits can be obtained to those of the first embodiment.

The reason for using a 5 % suspension of amorphous silica for specifying the pH value in the second embodiment is that the 5 % suspension has commonly been used in the field of handling silica and fluctuation of pH value is only about 0.1 even when the silica concentration is varied within the range of 4 to 10 %.

Preparation of Amorphous Silica

A process for the preparation of amorphous silica used in the first and second embodiment of the present invention will be illustrated. For example, there are a process comprising adding an acid to an aqueous solution of sodium silicate containing a metal salt or other wet processes for preparing silica, which have the feature consisting in:

(1) adding an acid continuously or batchwise,

(2) carrying out the reaction at a temperature of about 90 °C or higher and

(3) adjusting the pH of the reaction slurry to 4.0 to 6.5.

As the metal salt, there are generally used alkali metal salts or alkaline earth metal salts of inorganic acids or organic acids and from an economical point of view, it is preferable to use byproducts resulting from alkali metal silicates and acids. As the alkali metal silicate, it is economically preferable to use No.3 sodium silicate and as the acid, mineral acids such as sulfuric acid and hydrochloric acid are preferably used.

Control of the pH of the amorphous silica suspension (5 % suspension) in the second embodiment in the range of 7.0 to 9.0 is generally carried out by adding a mineral acid or alkali metal or alkaline earth metal hydroxide to the resulting slurry after the above described reaction (i.e. after adding an acid to an aqueous solution of an alkali metal silicate containing a metal salt and subjecting the mixture to reaction).

Application of Amorphous Silica to Heat Sensitive Recording Paper

The amorphous silica filler of the first or second embodiment in the present invention can be added to a solution of a water-soluble polymer in a proportion of up to 40 parts by weight to 100 parts by weight of the solid constituents and can be used as a high concentration amorphous silica dispersion liquid. In the case of preparing a coating liquid composition for a heat sensitive recording paper, there can respectively be used known leuco dyes of fluoran type or leuco dyes of non-fluoran type as a coloring agent, phenolic compounds as a developer and various waxes as a sensitizer.

Measurement of Properties of Amorphous Silica

The pore volume specified in the first and second embodiments is determined by the following method.

The nitrogen adsorption external surface area by the t-method, BET specific surface area by water vapor adsorption, oil absorption amount, residual sodium ion content in amorphous silica and median diameter, specified in the first embodiment, and the pH value of amorphous silica in a 5 % suspension, specified in the second embodiment, are determined by the following methods.

(1) Pore Volume (Vp)

A sample dried at 105 °C for 2 hours (which will hereinafter be referred to as "dry sample" merely) is sampled, subjected to degassing in vacuum at 0.01 mmHg or lower and the pore volume thereof is measured by means of a mercury porosimeter of 2000 type manufactured by CARLO ERBA INSTRUMENTS, during which the mercury contact angle used for processing the data is 141.3 degrees.

(2) Nitrogen Adsorption External Surface Area by T-method

The dry sample is sampled, subjected to degassing in vacuum at 0.01 mmHg or lower and then to measurement of the nitrogen adsorption at 77 K and the external surface area by the t-method is thus obtained using the standard isotherm of non-porous silica [Cf.J. H. de Boer, J. C. P. Broekhoff, "J. Colloid Interface Sci." 21, 405 (1966)].

(3) BET Specific Surface Area by Water Vapor Asorption

The dry sample is sampled, subjected to degassing in vacuum at 0.01 mmHg or lower and then to measurement of the water vapor adsorption isotherm at 293 K by BEL SORP 18 of BEL JAPAN, Inc. and the specific surface area is obtained by the BET method. The molecular cross-sectional area is 10.6Å$^2$ [Cf. Hiromitsu Naono, "Summary Papers for Third Meeting of Presenting Research Results by Japan Adsorption Society (Nippon Kyuchaku Gakkai)", page 78 (1989)].

(4) Oil Absorption Amount

According to JIS-K 5101.

(5) Residual Sodium Content in Amorphous Silica

The dry sample is subjected to a treatment with hydrofluoric acid and hydrochloric acid to remove silica component and the residual sodium content is quantitatively determined by ion chromatography.

(6) Median Grain Diameter

The median grain diameter is measured by the Coulter Counter method using an aperture size of 30 $\mu$ m.

(7) pH

5 g of the dry sample is sampled, mixed with 100 ml of distilled water, heated and boiled and immediately cooled to room temperature, after which the pH of the cooled liquid is measured.

The following examples are given in order to illustrate the present invention in detail without limiting the same.

Examples

The first embodiment will be specifically illustrated by the following Examples 1 to 4 with Comparative Examples 1 to 5.

The amorphous silicas obtained in Examples 1 to 4 and Comparative Examples 1 to 5 are shown in Table 5 and estimation of these amorphous silicas as a filler for a heat sensitive recording paper is carried out by preparing the following coating liquid compositions and then subjecting to the following estimation method, thus obtaining estimation results tabulated in Table 6.

(Preparation of Coating Liquid Composition)

1. Dye Dispersion Liquid (Liquid A)

Dye (S-205 -commercial name- made by Yamada Kagaku KK)     30 g

5 % PVA Aqueous Solution     150 g

2. Sensitizer Dispersion Liquid (Liquid B)

p-Benzylbiphenyl     30 g

5 % PVA Aqueous Solution     150 g

3. Finely Powdered Amorphous Silica Dispersion Liquid (Liquid C)

    Finely Powdered Amorphous Silica                          30 g

    5 % PVA Aqueous Solution                                  100 g

4. Developer Dispersion Liquid (Liquid D)

    Bisphenol A                                           30 g

    5 % PVA Aqueous Solution                                  150 g

5. Coating Liquid Composition

    Dye Dispersion (Liquid A)                                 1 g

    Sensitizer Dispersion (Liquid B)                        5 g

    Finely Powdered Amorphous Silica Dispersion (Liquid C)    2 g

    Developer Dispersion (Liquid D)                           3 g

    30 % Zinc Stearate                                    0.5 g

    10 % PVA Aqueous Solution                                1 g

The above described five components were mixed with agitation for 15 minutes to prepare each of "coating liquid compositions".

Measurement of the viscosity of the finely powdered amorphous silicas and estimation thereof will be illustrated with required items for the estimation as a filler for a heat sensitive recording paper:

(1) Viscosity of Finely Powdered Amorphous Silica

The finely powdered amorphous silica dispersion liquid (Liquid C) was stirred at 1500 rpm for 15 minutes and subjected to measurement of the viscosity by a viscometer of B type. The viscometer was operated using a Rotor of No. 3 at 60 rpm.

The viscosity was also estimated by visual observation according to the estimation standard of Table 1.

Table 1   Viscosity Estimation

| Standard of Judgment | Viscosity | Judgment Mark |
|---|---|---|
| considerably low viscosity | less than 20 cp | ◎ |
| low viscosity to be used practically | 20-50 cp | ○ |
| not discharged from vessel and not useful | more than 400 cp | X |

(2) Test of Heat Sensitive Recording Paper

Each of the dispersion liquids was pulverized by a sand mill to prepare a coating liquid composition and coated onto a commercially available fine quality paper by a bar coater of 10 mil. The thus obtained heat sensitive recording paper was subjected to a calendering treatment and then to measuremnt of ① surface whiteness, ② coloring density and ③ melting material adhesion by the following methods:

① Surface Whiteness

The coating liquid composition for a heat sensitive recording paper was coated and after 24 hours, base paper discoloration of the coated paper (recording paper) was measured by a Hunter Whiteness Meter with an A Filter (made by Toyo Seiki KK).

The degree of base paper discoloration was estimated by visual observation according to the estimation standard of Table 2, during which the measurement was carried out after superimposing five fine quality papers on the back side of the coloring surface of the recording paper.

Table 2 Estimation of Base Paper Discoloration

| Standard of Judgment | Measured Value of Hunter Whiteness Meter | Judgment Mark |
|---|---|---|
| not colored | more than 78 | ◎ |
| slightly colored but practically useful | 75-77 | ○ |
| colored and not useful | less than 75 | X |

② Coloring Density

The coating liquid composition for a heat sensitive recording paper was coated, followed by drying at room temperature, and a thermal plate (85 °C ) was pressed to the back side of the coated surface for 5 seconds, during which the coloring density was measured by an A filter of Hunter Whiteness Meter with an A Filter.

The coloring density was estimated by visual observation according to the estimation standard of Table 3, during which the measurement was carried out after superimposing five fine quality papers on the back side of the coloring surface of the recording paper.

Table 3

| Standard of Judgment | Measured Value of Hunter Whiteness Meter | Judgment Mark |
|---|---|---|
| high coloring density and useful | less than 25 | ○ |
| low coloring density and not useful | more than 25 | X |

③ Degree of Melting Material Adhesion

The coating liquid composition for a heat sensitive recording paper was coated, followed by drying at room temperature. A filter paper of No. 2 was combined with the coated surface and pressed to an impulse sealer (Impulse 300 type -commercial name- manufactured by Fuji Mfg., Co., Ltd.) for 5 seconds, during which the state of the filter paper was estimated by visual observation according to the estimation standard of Table 4.

## Table 4

| Standard of Judgment | Judgment Mark |
|---|---|
| hardly adhered | ◎ |
| somewhat adhered but useful | ○ |
| adhesion of filter paper to recording paper to be hardly stripped | X |

(3) Synthetic Judgment

Synthetic judgment was carried out from the viscosity of finely powdered amorphous silica and the test of heat sensitive recording paper according to the standard described in "Note" of Table 6.

Examples 1 to 4 of the first embodiment are now set forth.

Example 1

A commercially available sodium silicate of No. 3 was diluted with a 10 % aqueous solution of sodium sulfate to give a specific gravity of 1.20 (50 °C ) and 5 liter of the diluted solution was charged in a reaction tank, to which 430 ml of 42.5 % sulfuric acid was added with agitation at a temperature of 95 ± 2 °C for a period of 30 minutes. After the addition of sulfuric acid, the pH of the reaction slurry was adjusted to 4.0 and the slurry was then filtered through a filter press, followed by washing with water.

The resulting water-washed cake was dried at 140 °C for 1 hour and then pulverized by a jet mill (PJM 100 type -commercial name- made by Nippon Pneumatic Mfg., Co., Ltd., 6 kg/cm²) to obtain finely powdered amorphous silica as shown in Table 5.

Using the resulting finely powdered amorphous silica, the above described coating liquid composition was prepared and subjected to estimation as a filler for a heat sensitive recording paper by the above described estimation method, thus obtaining estimation results shown in Table 6.

Example 2

A commercially available sodium silicate of No. 3 was diluted with a 10 % aqueous solution of sodium sulfate to give a specific gravity of 1.08 (50 °C ) and 5 liter of the diluted solution was charged in a reaction tank, to which 251 ml of 42.5 % sulfuric acid was added with agitation at a temperature of 95 ± 2 °C for a period of 30 minutes. After the addition of sulfuric acid, the pH of the reaction slurry was adjusted to 4.0 and the slurry was then filtered through a filter press, followed by washing with water.

The resulting water-washed cake was dried at 140 °C for 1 hour and then pulverized by a jet mill to obtain finely powdered amorphous silica as shown in Table 5.

The resulting finely powdered amorphous silica was subjected to estimation as a filler for a heat sensitive recording paper under the same conditions and by the same method as in Example 1, thus obtaining estimation results shown in Table 6.

Example 3

A commercially available sodium silicate of No. 3 was diluted with a 5 % aqueous solution of sodium sulfate to give a specific gravity of 1.20 (50 °C ) and 5 liter of the diluted solution was charged in a reaction tank, to which 437 ml of 42.5 % sulfuric acid was added with agitation at a temperature of 95 ± 2 °C for a period of 30 minutes. After the addition of sulfuric acid, the pH of the reaction slurry was adjusted to 4.0 and the slurry was then filtered through a filter press, followed by washing with water.

The resulting water-washed cake was dried at 140 °C for 1 hour and then pulverized by a jet mill to obtain finely powdered amorphous silica as shown in Table 5.

The resulting finely powdered amorphous silica was subjected to estimation as a filler for a heat sensitive recording paper under the same conditions and by the same method as in Example 1, thus obtaining estimation results shown in Table 6.

Example 4

A commercially available sodium silicate of No. 3 was diluted with a 5 % aqueous solution of sodium sulfate to give a specific gravity of 1.14 (50 °C ) and 5 liter of the diluted solution was charged in a reaction tank, to which 344 ml of 42.5 % sulfuric acid was added with agitation at a temperature of 90 ± 2 °C for a period of 40 minutes. After the addition of sulfuric acid, the pH of the reaction slurry was adjusted to 4.0 and the slurry was then filtered through a filter press, followed by washing with water.

The resulting water-washed cake was dried at 140 °C for 1 hour and then pulverized by a jet mill to obtain finely powdered amorphous silica as shown in Table 5.

The resulting finely powdered amorphous silica was subjected to estimation as a filler for a heat sensitive recording paper under the same conditions and by the same method as in Example 1, thus obtaining estimation results shown in Table 6.

Comparative Examples 1 to 5 for the first embodiment will be given.

Comparative Example 1

A commercially available sodium silicate of No. 3 was diluted with a 5 % aqueous solution of sodium sulfate to give a specific gravity of 1.08 (50 °C ) and 5 liter of the diluted solution was charged in a reaction tank, to which 251 ml of 42.5 % sulfuric acid was added with agitation at a temperature of 95 ± 2 °C for a period of 30 minutes. After the addition of sulfuric acid, the pH of the reaction slurry was adjusted to 4.0 and the slurry was then filtered through a filter press, followed by washing with water.

The resulting water-washed cake was dried at 140 °C for 1 hour and then pulverized by a hammer mill (atomizer, made by POWREX CORPORATION) to obtain finely powdered amorphous silica as shown in Table 5.

The resulting finely powdered amorphous silica was subjected to estimation as a filler for a heat sensitive recording paper under the same conditions and by the same method as in Example 1, thus obtaining estimation results shown in Table 6.

Comparative Example 2

A commercially available sodium silicate of No. 3 was diluted with a 10 % aqueous solution of sodium sulfate to give a specific gravity of 1.08 (50 °C ) and 5 liter of the diluted solution was charged in a reaction tank, to which 251 ml of 42.5 % sulfuric acid was added with agitation at a temperature of 75 ± 2 °C for a period of 30 minutes. After the addition of sulfuric acid, the pH of the reaction slurry was adjusted to 4.0 and the slurry was then filtered through a filter press, followed by washing with water.

The resulting water-washed cake was dried at 140 °C for 1 hour and then pulverized by a jet mill to obtain finely powdered amorphous silica as shown in Table 5.

The resulting finely powdered amorphous silica was subjected to estimation as a filler for a heat sensitive recording paper under the same conditions and by the same method as in Example 1, thus obtaining estimation results shown in Table 6.

Comparative Example 3

A commercially available sodium silicate of No. 3 was diluted with a 5 % aqueous solution of sodium sulfate to give a specific gravity of 1.20 (50 °C ) and 5 liter of the diluted solution was charged in a reaction tank, to which 437 ml of 42.5 % sulfuric acid was added with agitation at a temperature of 75 ± 2 °C for a period of 30 minutes. After the addition of sulfuric acid, the pH of the reaction slurry was adjusted to 4.0 and the slurry was then filtered through a filter press, followed by washing with water.

The resulting water-washed cake was dried at 140 °C for 1 hour and then pulverized by a jet mill to obtain finely powdered amorphous silica as shown in Table 5.

The resulting finely powdered amorphous silica was subjected to estimation as a filler for a heat sensitive recording paper under the same conditions and by the same method as in Example 1, thus obtaining estimation results shown in Table 6.

## Comparative Example 4

A commercially available sodium silicate of No. 3 was diluted with a 10 % aqueous solution of sodium sulfate to give a specific gravity of 1.20 (50 °C ) and 5 liter of the diluted solution was charged in a reaction tank, to which 418 ml of 42.5 % sulfuric acid was added with agitation at a temperature of 95 ± 2 °C for a period of 45 minutes. After the addition of sulfuric acid, the pH of the reaction slurry was adjusted to 5.5 and the slurry was then filtered through a filter press, followed by washing with water.

The resulting water-washed cake was dried at 140 °C for 1 hour and then pulverized by a jet mill to obtain finely powdered amorphous silica as shown in Table 5.

The resulting finely powdered amorphous silica was subjected to estimation as a filler for a heat sensitive recording paper under the same conditions and by the same method as in Example 1, thus obtaining estimation results shown in Table 6.

## Comparative Example 5

Using a silica made by Mizusawa Industrial Chemicals, Ltd. (Mizukasil P-527 -commercial name-), this silica was subjected to estimation as a filler for a heat sensitiverecording paper under the same conditions and by the same method as in Example 1, thus obtaining estimation results shown in Table 6.

Table 5

| | Vp (ml/g) | External Surface ($m^2/g$) | Specific Surface Area ($H_2O$) ($m^2/g$) | Oil Absorption (ml/100g) | Sodium Ion (ppm) | Mean Grain Diameter ($\mu$m) | Specific Surface Area ($N_2$) ($m^2/g$) |
|---|---|---|---|---|---|---|---|
| Example | | | | | | | |
| 1 | 2.09 | 61 | 230 | 148 | 750 | 1.4 | 236 |
| 2 | 1.98 | 37 | 240 | 145 | 530 | 1.2 | 283 |
| 3 | 1.66 | 68 | 244 | 125 | 1150 | 1.4 | 120 |
| 4 | 2.30 | 48 | 240 | 154 | 557 | 1.2 | 250 |
| Comparative Example | | | | | | | |
| 1 | 3.06 | 59 | 212 | 150 | 560 | 4.0 | 259 |
| 2 | 2.88 | 63 | 273 | 136 | 880 | 1.3 | 365 |
| 3 | 3.02 | 96 | 231 | 164 | 930 | 1.4 | 280 |
| 4 | 1.47 | 87 | 226 | 98 | 1740 | 1.4 | 203 |
| 5 | 2.89 | 38 | 195 | 154 | 2340 | 1.4 | 42 |

Table 6

| | Viscosity | | Base Paper Discoloration | | Coloring Density | | Melting Material | Synthetic |
|---|---|---|---|---|---|---|---|---|
| | Value | Judgment | Value | Judgment | Value | Judgment | Adhesion | Judgment |
| Example | | | | | | | | |
| 1 | 22 | ○ | 77.7 | ○ | 17.6 | ○ | ◎ | ○ |
| 2 | 16 | ◎ | 80.1 | ◎ | .17.0 | ○ | ◎ | ◎ |
| 3 | 16 | ◎ | 76.7 | ○ | 15.8 | ○ | ○ | ○ |
| 4 | 22 | ○ | 78.0 | ◎ | 18.4 | ○ | ◎ | ◎ |
| Comparative Example | | | | | | | | |
| 1 | 466 | X | 77.9 | ○ | 26.0 | X | X | X |
| 2 | 540 | X | 77.3 | ○ | 25.9 | X | ○ | X |
| 3 | 710 | X | 70.5 | X | 14.5 | ○ | ◎ | X |
| 4 | 12 | ◎ | 77.7 | ○ | 18.0 | ○ | X | X |
| 5 | 1100 | X | 78,5 | ◎ | 17.4 | ○ | ◎ | ○ |

Note: Synthetic Judgment Standard

◎ : no problem on practical use

○ : some problem but sufficiently put to practical use

X : not put to practical use

Viscosity Judgment Standard: according to Table 1

Base Paper Discoloration Judgment Standard: according to Table 2

Coloring Density Judgment Standard: according to Table 3

Melting Material Adhesion Judgment Standard: according to Table 4

As is evident from "Viscosity Judgment" in Table 6, it can be understood that the finely powdered amorphous silica obtained in Examples 1 to 4 of the first embodiment exhibits a low viscosity during preparing its dispersion liquid and accordingly, can sufficiently be put to practical use.

Furthermore, it will clearly be understood from Table 6 that when using the finely powdered amorphous silica as a filler for a heat sensitive recording paper, no base paper discoloration is found, the coloring density is high and no melting material adhesion takes place. In view of these test results (test results for the viscosity

EP 0 552 065 A1

of a finely powdered amorphous silica dispersion liquid and for a heat-sensitive recording paper), it is apparent that the finely powdered amorphous silicas obtained in Examples 1 to 4 have no problem on practical use and are very excllent fillers, as shown in "Synthetic Judgment" of Table 6, as a filler for a heat sensitive recording paper.

In contrast, in Comparative Examples 1 to 4, all the samples cannot be put to pratical use, as a synthetic judgment. Comparative Example 5 has possibility on practical use, but the finely powdered amorphous silica dispersion liquid has a high viscosity, so that a high concentration dispersion liquid cannot be obtained.

In the dispersion liquid of finely powdered amorphous silica in the first embodiment, the relationship between the added part of the finely powdered amorphous silica and the viscosity is illustrated based on Fig. 1, in which the relationship between the added part of amorphous silica and the viscosity is shown in the dispersion liquid of finely powdered amorphous silica obtained in Example 1 and the dispersion liquid of finely powdered amorphous silica of Comparative Example 5.

As apparent from Fig. 1, the finely powdered amorphous silica obtained in Example 1 shows a low viscosity even in a dispersion liquid having a dispersion concentartion of 40 parts by weight based on solid basis. On the other hand, the finely powdered amorphous silica obtained in Comparative Example 5 gives a high viscosity dispersion, in particular, resulting in poor dispersion when adding 40 parts of the silica.

The second embodiment will be specifically illustrated by the following Examples 5 to 9 with Comparative Examples 6 to 11.

The amorphous silicas obtained in Examples 5 to 9 and Comparative Examples 6 to 11 of the second embodiment are shown in Table 8 and estimation of these amorphous silicas as a filler for a heat sensitive recording paper is carried out by the use of the same methods as "Preparation of Coating Liquid Composition", "Estimation of Degree of Base Paper Discoloration in Table 2", "Estimati on of Degree of Coloring Density in Table 3" and "Estimation of Degree of Melting Material Adhesion in Table 4" according to the standards mentioned in " Note" of Table 9 as "Synthetic Judgment". These estimation results are tabulated in Table 9.

"Estimation of Viscosity of Finely Powdered Amorphous Silica Dispersion Liquid" in Examples 5 to 9 and Comparative Examples 6 to 11 of the second embodiment was carried out according to Table 7.

Table 7  Viscosity Estimation

| Standard of Judgment | Viscosity | Judgment Mark |
|---|---|---|
| considerably low viscosity | less than 20 cp | ◎ |
| low viscosity to be used practically | 20-50 cp | ○ |
| somewhat high viscosity but practically used | 51-200 cp | △ |
| not discharged from vessel and not useful | more than 400 cp | X |

Examples 5 to 8 of the second embodiment will be illustrated.

Example 5

A commercially available sodium silicate of No. 3 was diluted with a 5 % aqueous solution of sodium sulfate to give a specific gravity of 1.10 (50 °C ) and 5 liter of the diluted solution was charged in a reaction tank, to which 79 ml of 42.5 % sulfuric acid was added with agitation at a temperature of 95 ± 2 °C for a period of 10 minutes. At that temperature, the mixture was stirred for 30 minutes, to which 178 ml of 42.5 % sulfuric acid was poured for 20 minutes. After adding sulfuric acid, the pH of the reaction slurry was adjusted to 6.5 and the slurry was then filtered through a filter press, followed by washing with water.

The resulting water-washed cake was dried at 140 °C for 1 hour and then pulverized by a jet mill (PJM 100 type -commercial name- made by Nippon Pneumatic Mfg., Co., Ltd., 6 kg/cm$^2$) to obtain finely powdered

13

amorphous silica as shown in Table 8.

Using the resulting finely powdered amorphous silica, the coating liquid composition described in Example 1 of the first embodiment was prepared and subjected to estimation as a filler for a heat sensitive recording paper by the method described in Example 1, thus obtaining estimation results shown in Table 9.

Example 6

A commercially available sodium silicate of No. 3 was diluted with a 5 % aqueous solution of sodium sulfate to give a specific gravity of 1.09 (50 °C ) and 5 liter of the diluted solution was charged in a reaction tank, to which 84 ml of 42.5 % sulfuric acid was added with agitation at a temperature of 95 ± 2 °C for a period of 10 minutes. After the addition of sulfuric acid, the mixture was stirred at 95 ± 2 °C for 30 minutes. 169 ml of 42.5 % sulfuric acid was then added for 20 minutes. The pH of the reaction slurry was adjusted to 5.5 and the slurry was then filtered, followed by washing with water.

The resulting water-washed cake was dried at 140 °C for 1 hour and then pulverized by a jet mill to obtain finely powdered amorphous silica as shown in Table 8.

The resulting finely powdered amorphous silica was subjected to estimation as a filler for a heat sensitive recording paper under the same conditions and by the same method as in Example 5, thus obtaining estimation results shown in Table 9.

Example 7

A commercially available sodium silicate of No. 3 was diluted with a 8 % aqueous solution of sodium sulfate to give a specific gravity of 1.13 (50 °C ) and 5 liter of the diluted solution was charged in a reaction tank, to which 78 ml of 42.5 % sulfuric acid was added with agitation at a temperature of 95 ± 2 °C for a period of 10 minutes. After the addition of sulfuric acid, the mixture was stirred at 95 ± 2 °C for 30 minutes. 169 ml of 42.5 % sulfuric acid was then added for 20 minutes. The pH of the reaction slurry was adjusted to 6.0 and the slurry was then filtered, followed by washing with water.

The resulting water-washed cake was dried at 140 °C for 1 hour and then pulverized by a jet mill to obtain finely powdered amorphous silica as shown in Table 8.

The resulting finely powdered amorphous silica was subjected to estimation as a filler for a heat sensitive recording paper under the same conditions and by the same method as in Example 5, thus obtaining estimation results shown in Table 9.

Example 8

A commercially available sodium silicate of No. 3 was diluted with a 10 % aqueous solution of sodium sulfate to give a specific gravity of 1.15 (50 °C ) and 5 liter of the diluted solution was charged in a reaction tank, to which 246 ml of 42.5 % sulfuric acid was added with agitation at a temperature of 90 ± 2 °C for a period of 45 minutes. After the addition of sulfuric acid, the pH of the reaction slurry was adjusted to 5.5 and the slurry was then filtered, followed by washing with water.

The resulting water-washed cake was dried at 140 °C for 1 hour and then pulverized by a jet mill to obtain finely powdered amorphous silica as shown in Table 8.

The resulting finely powdered amorphous silica was subjected to estimation as a filler for a heat sensitive recording paper under the same conditions and by the same method as in Example 5, thus obtaining estimation results shown in Table 9.

Example 9

The pH of the reaction slurry obtained by the method of Example 5 was adjusted to 4.0 and the slurry was filtered and washed with water. 0.28 kg of the water-washed cake was dispersed in 5 liter of water with stirring, to which 0.7 liter of an aqueous solution of calcium hydroxide (0.8 g/l) was added, followed by stirring at room temperature for 2 hours.

The slurry was filtered and washed with water. The resulting cake was dried at 140 °C for 1 hour and then pulverized by a jet mill to obtain finely powdered amorphous silica as shown in Table 5.

The resulting finely powdered amorphous silica was subjected to estimation as a filler for a heat sensitive recording paper under the same conditions and by the same method as in Example 5, thus obtaining estimation results shown in Table 9.

Comparative Examples 6 to 11 of the second embodiment will be illustrated.

Comparative Examples 6

A commercially available sodium silicate of No. 3 was diluted with a 10 % aqueous solution of sodium sulfate to give a specific gravity of 1.14 (50 °C ) and 5 liter of the diluted solution was charged in a reaction tank, to which 52 ml of 42.5 % sulfuric acid was added with agitation at a temperature of 95 ± 2 °C for a period of 10 minutes. After the addition of sulfuric acid, the mixture was stirred at 95 ± 2 °C for 30 minutes. 196 ml of 42.5 % sulfuric acid was then added for 35 minutes. The pH of the reaction slurry was adjusted to 5.5 and the slurry was then filtered, followed by washing with water.

The resulting water-washed cake was dried at 140 °C for 1 hour and then pulverized by a jet mill to obtain finely powdered amorphous silica as shown in Table 8.

The resulting finely powdered amorphous silica was subjected to estimation as a filler for a heat sensitive recording paper under the same conditions and by the same method as in Example 5, thus obtaining estimation results shown in Table 9.

Comparative Examples 7

A commercially available sodium silicate of No. 3 was diluted with a 5 % aqueous solution of sodium sulfate to give a specific gravity of 1.10 (50 °C ) and 5 liter of the diluted solution was charged in a reaction tank, to which 79 ml of 42.5 % sulfuric acid was added with agitation at a temperature of 95 ± 2 °C for a period of 8 minutes. After the addition of sulfuric acid, the mixture was stirred at 95 ± 2 °C for 30 minutes. 171 ml of 42.5 % sulfuric acid was then added for 22 minutes. The pH of the reaction slurry was adjusted to 7.5 and the slurry was then filtered, followed by washing with water.

The resulting water-washed cake was dried at 140 °C for 1 hour and then pulverized by a jet mill to obtain finely powdered amorphous silica as shown in Table 8.

The resulting finely powdered amorphous silica was subjected to estimation as a filler for a heat sensitive recording paper under the same conditions and by the same method as in Example 5, thus obtaining estimation results shown in Table 9.

Comparative Examples 8

A commercially available sodium silicate of No. 3 was diluted with a 5 % aqueous solution of sodium sulfate to give a specific gravity of 1.10 (50 °C ) and 5 liter of the diluted solution was charged in a reaction tank, to which 250 ml of 42.5 % sulfuric acid was added with agitation at a temperature of 95 ± 2 °C for a period of 30 minutes. After the addition of sulfuric acid, the pH of the reaction slurry was adjusted to 4.0 and the slurry was then filtered, followed by washing with water.

The resulting water-washed cake was dried at 140 °C for 1 hour and then pulverized by a jet mill to obtain finely powdered amorphous silica as shown in Table 8.

The resulting finely powdered amorphous silica was subjected to estimation as a filler for a heat sensitive recording paper under the same conditions and by the same method as in Example 5, thus obtaining estimation results shown in Table 9.

Comparative Examples 9

A commercially available sodium silicate of No. 3 was diluted with a 5 % aqueous solution of sodium sulfate to give a specific gravity of 1.10 (50 °C ) and 5 liter of the diluted solution was charged in a reaction tank, to which 82 ml of 42.5 % sulfuric acid was added with agitation at a temperature of 60 ± 2 °C for a period of 3 minutes. After the addition of sulfuric acid, the mixture was stirred at 60 ± 2 °C for 5 minutes. 25 ml of 42.5 % sulfuric acid was then added for 1 minute and stirred for 20 minutes. Further, 144 ml of 42.5 % sulfuric acid was then added for 10 minutes, the pH of the reaction slurry was adjusted to 5.5 and the slurry was then filtered, followed by washing with water.

The resulting water-washed cake was dried at 140 °C for 1 hour and then pulverized by a jet mill to obtain finely powdered amorphous silica as shown in Table 8.

The resulting finely powdered amorphous silica was subjected to estimation as a filler for a heat sensitive recording paper under the same conditions and by the same method as in Example 5, thus obtaining estimation results shown in Table 9.

Comparative Examples 10

A commercially available sodium silicate of No. 3 was diluted with water to give a specific gravity of 1.05 (50 °C ) and 5 liter of the diluted solution was charged in a reaction tank, to which 148 ml of 42.5 % sulfuric acid was added with agitation at a temperature of 90 ± 2 °C for a period of 5 minutes.

After the addition of sulfuric acid, the mixture was stirred at 90 ± 2 °C for 30 minutes. 166 ml of 42.5 % sulfuric acid was then added for 8 minutes and stirred at 95 ± 2 °C for 30 minutes. The pH of the reaction slurry was adjusted to 4.5 and the slurry was then filtered, followed by washing with water.

The resulting water-washed cake was dried at 140 °C for 1 hour and then pulverized by a jet mill to obtain finely powdered amorphous silica as shown in Table 8.

The resulting finely powdered amorphous silica was subjected to estimation as a filler for a heat sensitive recording paper under the same conditions and by the same method as in Example 5, thus obtaining estimation results shown in Table 9.

Comparative Examples 11

Using a silica made by Mizusawa Industrial Chemicals, Ltd. (Mizukasil P-527 -commercial name-), this silica was subjected to estimation as a filler for a heat sensitiverecording paper under the same conditions and by the same method as in Example 5, thus obtaining estimation results shown in Table 9.

Table 8

| Examples | | | | | | Comparative Examples | | | | | |
|---|---|---|---|---|---|---|---|---|---|---|---|
| | 5 | 6 | 7 | 8 | 9 | 6 | 7 | 8 | 9 | 10 | 11 |
| Vp (ml/g) | 2.78 | 2.73 | 2.27 | 2.04 | 2.69 | 1.78 | 2.73 | 2.56 | 3.49 | 3.65 | 2.89 |
| pH | 8.9 | 7.0 | 8.7 | 7.1 | 8.7 | 7.4 | 9.6 | 6.3 | 7.4 | 5.8 | 7.0 |

Table 9

| | Viscosity | | Base Paper Dis-coloration | | Coloring Density | | Melting Material | Synthetic |
|---|---|---|---|---|---|---|---|---|
| | Value | Judgment | Value | Judgment | Value | Judgment | Adhesion | Judgment |
| Example | | | | | | | | |
| 5 | 190 | △ | 80.5 | ◎ | 17.1 | ○ | ◎ | ○ |
| 6 | 180 | △ | 76.5 | ○ | 15.3 | ○ | ◎ | ○ |
| 7 | 18 | ◎ | 78.0 | ◎ | 18.9 | ○ | ◎ | ◎ |
| 8 | 18 | ◎ | 78.1 | ◎ | 15.6 | ○ | ◎ | ◎ |
| 9 | 150 | △ | 80.3 | ◎ | 17.0 | ○ | ◎ | ○ |
| Comparative Example | | | | | | | | |
| 6 | 20 | ○ | 77.6 | ○ | 27.0 | X | ○ | X |
| 7 | 30 | ○ | 76.1 | ○ | 26.4 | X | ◎ | X |
| 8 | 100 | △ | 74.1 | X | 16.4 | ○ | ◎ | X |
| 9 | * | X | 60.4 | X | 12.1 | ○ | ◎ | X |
| 10 | 940 | X | 56.4 | X | 12.0 | ○ | ◎ | X |
| 11 | 1100 | X | 78.5 | ◎ | 17.4 | ○ | ◎ | ○ |

Note: Synthetic Judgment Standard

◎ : no problem on practical use

○ : some problem but sufficiently put to practical use

X : not put to practical use

Viscosity Judgment Standard: according to Table 7

Base Paper Discoloration Judgment Standard: according to Table 2

Coloring Density Judgment Standard: according to Table 3

Melting Material Adhesion Judgment Standard: according to Table 4

Mark * : impossible to be dispersed

As is evident from "Viscosity Judgment" in Table 6, it can be understood that the finely powdered amorphous silica obtained in Examples 5 to 9 of the second embodiment (consisting in combination of the specified pore volume range of 2.0 to 2.8 ml/g and the specified pH range of the 5 % suspension of 7.0 to 9.0) exhibits a low viscosity during preparing its dispersion liquid and accordingly, can sufficiently be put to practical use (Examples 7 and 8), or exhibits a somewhat high viscosity but can be put to practical use (Examples 5, 6 and 9).

Furthermore, it will clearly be understood from Table 9 that when using the finely powdered amorphous silica as a filler for a heat sensitive recording paper, no base paper discoloration is found, the coloring density is high and no melting material adhesion takes place. In view of these test results (test results for the viscosity of a finely powdered amorphous silica dispersion liquid and for a heat sensitive recording paper), it is apparent that the finely powdered amorphous silicas obtained in Examples 5 to 9 have no problem on practical use and are very excllent fillers, as shown in "Synthetic Judgment" of Table 9, as a filler for a heat sensitive recording paper.

In contrast, in Comparative Examples 6, 9 and 11, all the samples satisfy the specified pH range, but are outside the pore volume (Cf. Table 8) and accordingly, Comparative Examples 6 and 9 cannot be put to pratical use, as a synthetic judgment. On the other hand, Comparative Example 11 has possibility on practical use, but the finely powdered amorphous silica dispersion liquid has a highviscosity, so that a high concentration dispersion liquid cannot be obtained.

In Comparative Examples 7 and 8, the pore volume is in the range specified in the second embodiment, but the pH values are outside the specified range (Cf. Table 8) and accordingly, these samples cannot similarly be put to practical use as a synthetic judgment.

Furthermore, Comparative Example 11 outside the pore volume and pH range is the same as described above.

It will be understood from Table 9 that in the second embodiment, desired excellent advantages can be obtained by combination of the specified pore volume in the range of 2.0 to 2.8 ml/g and the specified pH of a 5 % suspension in the range of 7.0 to 9.0.

Relationship between the first and second embodiments.

As to the amorphous silicas obtained in Examples 1 to 4 and Comparative Examples 1 to 5 of the first embodiment, the pH value of a 5 % suspension, specified in the second embodiment, is measured. The measured values are shown in Table 10 with the pore volume (Vp) of the finely powdered amorphous silica.

Table 10

| Examples | | | | | Comparative Examples | | | | |
|---|---|---|---|---|---|---|---|---|---|
| | 1 | 2 | 3 | 4 | 1 | 2 | 3 | 4 | 5 |
| Vp (ml/g) | 2.09 | 1.98 | 1.66 | 2.30 | 3.06 | 2.88 | 3.02 | 1.47 | 2.89 |
| pH | 5.8 | 6.0 | 6.2 | 5.9 | 5.8 | 5.6 | 6.1 | 7.5 | 7.0 |

On the other hand, as to the amorphous silicas obtained in Examples 5 to 9 and Comparative Examples 6 to 10 of the second embodiment, the physical properties specified in the first embodiment are shown in Table 11.

Table 11

| Example | Vp (ml/g) | External Surface (m²/g) | Specific Surface Area (H₂O) (m²/g) | Oil Absorption (ml/100g) | Sodium Ion (ppm) | Mean Grain Diameter (μm) |
|---|---|---|---|---|---|---|
| 5 | 2.78 | 49 | 255 | 135 | 2560 | 1.4 |
| 6 | 2.73 | 46 | 230 | 134 | 700 | 1.4 |
| 7 | 2.27 | 32 | 210 | 130 | 1320 | 1.4 |
| 8 | 2.04 | 34 | 200 | 118 | 1300 | 1.7 |
| 9 | 2.69 | 52 | 225 | 134 | 680 | 1.5 |
| Comparative Example | | | | | | |
| 6 | 1.78 | 32 | - | 106 | 1694 | 1.5 |
| 7 | 2.73 | 40 | - | 135 | 6700 | 1.4 |
| 8 | 2.56 | - | - | 134 | 320 | 1.4 |
| 9 | 3.49 | 124 | 245 | 230 | 4180 | 5.1 |
| 10 | 3.65 | 128 | 177 | 240 | 2330 | 6.8 |

In view of Table 10 and the foregoing Table 6, it is apparent that the desired advantages by the present invention can be obtained even if the amorphous silicas obtained in Examples 1 to 4 of the first embodiment each have a pH value of a 5 % suspension outside the specified pH range in the second embodiment.

On the other hand, in view of Table 11 and the foregoing Table 9, it is apparent that the desired advantages by the present invention can similarly be obtained even if the amorphous silicas obtained in Examples 5 to 9 of the second embodiment each have physical properties outside those specified in the first embodiment.

As illustrated in detail above, the feature of the first embodiment consists in using finely powdered amorphous silica having the specified physical values as a filler for a heat sensitive recording paper, whereby to obtain the benefits that a low viscosity dispersion liquid of finely powdered amorphous silica can be prepared and it is rendered possible to obtain a high concentration dispersion liquid, for example, with a 40 % dispersion in a step of producing a recording paper for a recording paper.

In addition, there can be obtained excellents effects or advantages, i.e. preventing melting material adhesion to a thermal head or recording layer, etc., appeared on a heat sensitive recording paper, preventing abrasion of a recording head in contact with a recording layer, attaining a high coloring sensitivity during recording, inhibiting, as far as possible, fading and base paper discoloration of a heat sensitive recording paper and the like.

The feature of the second embodiment consists in combining an amorphous silica having the specified pore volume with the specified pH range in the form of a dispersion (5 % suspension) thereof, whereby to obtain, similarly to the first embodiment, excellents effects or advantages, i.e. preventing melting material adhesion to a thermal head or recording layer, etc., appeared on a heat sensitive recording paper, preventing abrasion of a recording head in contact with a recording layer, attaining a high coloring sensitivity during recording, inhibiting, as far as possible, fading and base paper discoloration of a heat sensitive recording paper and the like.

**Claims**

1. A silica filler for a heat sensitive recording paper, consisting of amorphous silica having a pore volume of 1.5 to 2.8 ml/g with a pore radius of at most 75000 Å.

2. A silica filler of a heat sensitive recording paper as claimed in claim 1, wherein the amorphous silica has a pore volume of 1.5 to 2.5 ml/g with a pore radius of at most 75000 Å and nitrogen adsorption external surface area by the t-method of 20 to 70 m$^2$/g.

3. A silica filler for a heat sensitive recording paper as claimed in claim 1 or claim 2, wherein the amorphous silica has a residual sodium ion content of at most 1500 ppm.

4. A silica filler for a heat sensitive recording paper as claimed in any one of the preceding claims, wherein the amorphous silica has an oil absorption amount of 100 to 200 ml/100 g.

5. A silica filler for a heat sensitive recording paper as claimed in any one of the preceding claims, wherein the amorphous silica has a median diameter of 1.0 to 1.5 $\mu$ m measured by the Coulter Counter method.

6. A silica filler for a heat sensitive recording paper as claimed in any one of the preceding claims, wherein the amorphous silica has a BET specific surface area by water vapor adsorption of 220 to 300 m$^2$/g.

7. A silica filler for a heat sensitive recording paper as claimed in any one of the preceding claims, wherein the amorphous silica has a pore volume of 2.0 to 2.8 ml/g with a pore radius of at most 75000 Å and a pH in a 5% suspension of 7.0 to 9.0.

8. A process for the production of a silica filler for a heat sensitive recording paper, consisting of amorphous silica having a pore volume of 1.5 to 2.8 ml/g with a pore radius of at most 75000 Å , comprising adding an acid to an aqueous solution of an alkali metal silicate containing metal salt, wherein the addition of an acid is carried out in continuous or intermittent manner and the reaction is carried out at a temperature of at least 90°, followed by adjusting the pH of the reaction slurry in the range of 4.0 to 6.5.

9. Heat sensitive recording paper comprising a silica filler as claimed in any one of claims 1 to 7 or when produced in accordance with the process as claimed in claim 8.

# F I G. I

⊙: EXAMPLE 1

△: COMPARATIVE  EXAMPLE 5

EP 0 552 065 A1

**European Patent Office**

**EUROPEAN SEARCH REPORT**

Application Number

EP 93 30 0303

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 135 976 (MIZUSAWA INDUSTRIAL CHEMICALS LIMITED) <br> * page 4, line 15 - line 24 * <br> * page 7, line 21 - line 25 * <br> * page 8, line 19 - line 26 * <br> * page 9, line 20 - page 10, line 3 * | 1-9 | B41M5/30 <br> C09C1/30 <br> C01B33/193 |
| A | EP-A-0 326 707 (NISSAN CHEMICAL INDUSTRIES LIMITED) <br> * page 4, line 32 - line 44 * | 1-7 | |

TECHNICAL FIELDS SEARCHED (Int. Cl.5)

B41M
C09C
C01B

The present search report has been drawn up for all claims

| Place of search | Date of completion of the search | Examiner |
|---|---|---|
| THE HAGUE | 20 APRIL 1993 | BACON A.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)

22